# EUROPÄISCHE PATENTSCHRIFT

(11) **EP 1 636 929 B1**
(45) Veröffentlichungstag und Bekanntmachung des Hinweises auf die Patenterteilung: **26.09.2007**
(21) Anmeldenummer: 04730880.4
(22) Anmeldetag: 03.05.2004
(51) Int. Cl.: H04J 14/02, H04B 10/08, H04B 10/17

(54) **VERFAHREN ZUR PREEMPHASE OPTISCHER SIGNALE IN EINEM BERTRAG UNGSSYSTEM MIT ADD-DROP-MODULEN**
METHOD FOR PRE-EMPHASISING OPTICAL SIGNALS IN A TRANSMISSION SYSTEM COMPRISING ADD-DROP MODULES
PROCEDE DE PREACCENTUATION DE SIGNAUX OPTIQUES DANS UN SYSTEME DE TRANSMISSION A MODULES D'INSERTION/D'EXTRACTION

(30) Priorität: 25.06.2003 DE 10328602
(43) Veröffentlichungstag der Anmeldung: 22.03.2006
(73) Patentinhaber: NOKIA SIEMENS NETWORKS GMBH & CO. KG, 81541 München (DE)
(72) Erfinder: PEISL, Wolfgang, 81245 München (DE); RAPP, Lutz, 82041 Deisenhofen (DE)
(86) Internationale Anmeldenummer: PCT/EP2004/050680
(87) Internationale Veröffentlichungsnummer: WO 2004/114567

(56) Entgegenhaltungen:
- EP-A- 0 959 578
- US-A1- 2002 015 199
- PRIGENT L ET AL: "8*2.5 GBIT/S TRANSMISSION IN A TRANSOCEANIC NETWORK" EUROPEAN CONFERENCE ON NETWORKS AND OPTICAL COMMUNICATIONS. NOC. BROADBAND SUPERHIGHWAY, XX, XX, 24. Juni 1996 (1996-06-24), Seiten 231-238, XP000789870

## Beschreibung

Die Erfindung betrifft ein Verfahren zur Preemphase optischer Signale in einem Übertragungssystem mit Add-Drop-Modulen nach dem Oberbegriff des Patentanspruches 1.

Optische Verstärker für ein zu übertragendes Multiplexsignal mit mehreren unterschiedliche Wellenlängen aufweisenden Kanälen weisen eine Wellenlängenabhängigkeit des Gewinns auf, die durch üblicherweise eingesetzte Glättungsfilter nicht vollständig behoben wird. Dadurch akkumulieren sich Leistungsunterschiede zwischen einzelnen Kanälen beim Durchlaufen einer optischen Übertragungsstrecke. Ferner ist auch die Rauschzahl dieser optischen Verstärker wellenlängenabhängig. Dadurch besitzen die Kanäle stark unterschiedliche optische Signal-Rauschabstände (OSNR = Optical Signal-to-Noise Ratio) an den jeweiligen Empfängern der Übertragungstrecke. In Punkt-zu-Punkt-Verbindungen wird daher häufig ein unter dem Namen "Preemphase" bekanntes Verfahren zur Nivellierung der Werte der Signal-Rauschabstände eingesetzt, das in A. R. Chraplyvy, J. A. Nagel and R. W. Tkach, "Equalization in Amplifier WDM Lightwave Transmission Systems", IEEE Photonics Technology Letters, Vol. 4, No. 8, August 1992, pp. 920-922 beschrieben wurde. Dabei werden anhand der am Ende der Übertragungsstrecke gemessenen Verteilung der Signal-Rauschabstände die senderseitigen Signalleistungen der Kanäle in einem iterativen Verfahren solange nachgeführt, bis sich am Ende der Übertragungsstrecke für alle Kanäle dieselben Signal-Rauschabstände ergeben. Ein wichtiges Merkmal dabei ist, dass an einem Ort die Signalleistungen aller Kanäle individuell eingestellt werden können.

Bei langen Übertragungsstrecken kann es unter Umständen nicht mehr ausreichen, nur am Anfang der Strecke die Signalleistungen der Kanäle anzupassen. Daher wurden spezielle einstellbare Filter (DGE = Dynamic Gain Equalizer) entwickelt, die eine kanalindividuelle Anpassung der Leistungen inmitten der Strecke ermöglichen. Dieselbe Aufgabe kann auch ein Add-Drop-Modul (OADM = Optical Add/Drop-Multiplexer) übernehmen, in dem eine vollständige Demultiplexierung auf Einzelkanäle erfolgt. Allgemein wird angenommen, dass sich eine optimale Signalqualität am Ende der Übertragungsstrecke ergibt, wenn am Ende eines Streckenabschnitts identische Werte der Signal-Rauschabstände für alle Kanäle erreicht werden. Unter Streckenabschnitt ist dabei der Teil einer optischen Übertragungsstrecke vorzugsweise vom Sender zum ersten Add-Drop-Modul OADM, von einem Add-Drop-Modul OADM zum nächsten Add-Drop-Modul OADM oder von einem Add-Drop-Modul OADM zum Demultiplexer mit den nachgeschalteten Empfängern zu verstehen.

Aus Kostengründen ist es häufig aber nicht sinnvoll, eine vollständige Demultiplexierung bis auf einzelne Kanäle vorzunehmen; stattdessen werden ganze Bänder von Kanälen durch ein Add-Drop-Modul OADM durchgeschleift. Es besteht dann in diesem Fall keine Möglichkeit, die Leistungen der Kanäle an der Stelle des OADM individuell einzustellen, wie es eine übliche Methode zur Preemphase vorschreiben würde.

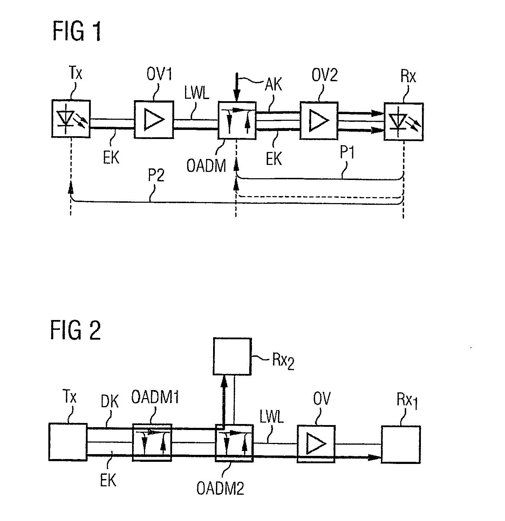

Zum besseren Verständnis des Problems wird im folgenden ein einfacher Fall betrachtet. In dem in Fig. 1 abgebildeten Netz wird ein erstes z. B. rotes Subband von Express-Kanälen EK vom Anfang Tx der Übertragungsstrecke LWL bis zu seinem Ende Rx übertragen, während ein zweites z. B. blaues Subband von Add-Kanälen AK - z. B. mit kleineren Wellenlängen als im roten Subband - an einem in der Übertragungstrecke LWL angeordneten Add-Drop-Modul OADM eingekoppelt wird. Das rote Subband werde im Add-Drop-Modul OADM durchgeschleift. Zwischenverstärker OV1, OV2 sind entlang der Übertragungsstrecke LWL zur Regeneration der Signale vorgesehen.

Da eine kanalindividuelle Einstellung der Leistung im Add-Drop-Modul OADM nicht möglich ist, bietet es sich zunächst an, für die beiden Subbänder eine getrennte Preemphase P1, P2 durchzuführen. Und zwar für das blaue Subband vom Add-Drop-Modul OADM zu dem Empfänger Rx und für das rote Subband von dem Sender Tx zu dem Empfänger Rx. Dabei ergibt sich jedoch das Problem, dass die Rauschzahl eines optischen Verstärkers bei großen Wellenlängen (rot) um beispielsweise 2dB größer sein kann als bei kleinen Wellenlängen (blau). Bei Konstanthaltung einer mittleren Kanalleistung pro Subband zeigt das rote Subband eine deutlich schlechtere Performance als das blaue Subband. Eine derartige Methode zur kanalindividuellen Leistungsanpassung ist in DE 100 24 393 A1 beschrieben, bei der Signalpegel von Express-Kanälen, Add-Kanälen, Drop-Kanälen oder Add-Drop-Kanälen mit Hilfe eines regelbaren Dämpfungsgliedes am Sender oder in einem Add-Drop-Modul individuell angepasst werden. Dabei wird zunächst eine Preemphase für die Express-Kanäle durchgeführt. Anschließend wird der Signalpegel des mindestens einen optischen Add-Drop-Signals an das ermittelte Leistungsspektrum der Express-Kanäle mittels einer Intra- oder Extrapolation angepasst. Damit fügt sich ein Add-Drop-Signal hinsichtlich der Amplitude und der Phase in das ermittelte Leistungsspektrum der Express-Kanäle optimal, jedoch nicht in Hinblick auf Performance durch Rauschzahleffekte.

In **Fig. 2** wird auf ein weiteres Problem vorzugsweise für volloptische Netze eingegangen, das auch Auswirkungen auf das davor in Fig. 1 beschriebene Verfahren hat. Express-Kanäle EK als rotes Subband werden aus einem Sender Tx zu einem ersten Empfänger Rx1 entlang einer Übertragungsstrecke übertragen. In die Übertragungsstrecke sind zwei Add-Drop-Module OADM1, OADM2 integriert. Bei dem Sender Tx werden Drop-Kanäle DK als blaues Subband in die Übertragungsstrecke LWL eingespeist und bei dem zweiten Add-Drop-Modul OADM2 aus der Übertragungsstrecke LWL abgezweigt und zu einem zweiten Empfänger Rx2 ge führt. Zwischenverstärker OV sind bei der Übertragungsstrecke LWL vorgesehen.

Sowohl mindestens ein Signal des roten Subbandes als mindestens ein Signal auch des blauen Subbandes werden an demselben Ort in das Netz eingespeist. Im Rahmen einer Preemphase wird an dem zweiten Add-Drop-Modul OADM2 für beide Signale ein identischer Wert der Signal-Rauschabstände OSNR erzwungen. Dabei wird aber außer Acht gelassen, das Signale im blauen Subband nach Passieren des zweiten Add-Drop-Moduls OADM2 eine wesentlich kürzere Strecke zurückzulegen haben als Signale im roten Subband. Express-Kanäle EK werden daher am dem ihnen zugeordneten ersten Empfängern Rx1 einen deutlich schlechteren Signal-Rauschabstand OSNR aufweisen als Signale in Drop-Kanälen DK am zweiten Empfänger Rx2.

Aus EP 0 959 578 A2 ist eine Methode zur Preemphase für ein WDM-Multiplex-Signal bekannt, das über eine Übertragungsstrecke mit Add- und Drop-Stellen übertragen wird. Am Ende der Übertragungsstrecke wird ein Computer zentral alle Preemphase-Schritte steuern, damit absolute Signal-Rauschabstände der Signale an mit den Add- und Drop-Stellen der Übertragungsstrecke angeschlossenen Empfängern möglichst gleich sind. Relative unterschiedliche Verschlechterungen der Signal-Rauschabstände z. B. zwischen beliebig übertragenen Signalen in Express-Kanälen und in Add-Drop-Kanälen werden dabei nicht berücksichtigt.

Ein weiteres Verfahren zur Preemphase eines optischen Wellenlangemultiplexsignals ist aus US-A-2002/0015199 bekannt.

Aufgabe der Erfindung ist es, ein Verfahren zur Preemphase von Signalen in einer Übertragungsstrecke mit Einspeise- und/oder Abzweigstellen anzugeben, bei dem relative Verschlechterungen der Signal-Rauschabstände z. B. zwischen übertragenen Signalen über beliebige Kategorien von Kanälen (Express, Add, Drop, Add-Drop) berücksichtigt sein sollten. Das Verfahren sollte sich ebenfalls für eine Punkt-zu-Punkt-Verbindung eignen.

Eine Lösung der Aufgabe erfolgt hinsichtlich ihres Verfahrensaspekts durch ein Verfahren mit den Merkmalen des Patentanspruchs 1.

Ausgehend vom durch Fig. 1 dargestellten Stand der Technik, bei dem für jedes Subband eine getrennte Preemphase durchgeführt wird und bei der die mittlere Kanalleistung pro Subband konstant gehalten wird, zeigt das rote Subband eine deutlich schlechtere Performance am Empfänger als eigentlich möglich. Wenn nun alle Kanäle am Add-Drop-Modul OADM eingekoppelt werden würden, könnte man identische Signal-Rauschabstände für alle Kanäle am Empfänger Rx erzielen, indem man erfindungsgemäß die mittlere Kanalleistung im blauen Subband - Add-Kanäle AK - zugunsten des roten Subbands - Express-Kanäle EK - absenkt.

Eine Verbesserung kann erzielt werden, indem zunächst für alle Kanäle, die in dem Link übertragen werden, die optimale Leistungsverteilung am OADM berechnet wird, d.h. es erfolgt für alle Kanäle eine Preemphase-Berechnung für die Strecke vom OADM zum Ende der Übertragungsstrecke. Für das blaue Subband wird diese Leistungsverteilung am OADM eingestellt. Für das rote Subband wird hingegen nur die sich aus einer Preemphase-Einstellung hypothetisch ergebende mittlere Leistungsänderung berechnet und mit Hilfe eines Dämpfungsgliedes die mittlere Leistung in diesem Subband entsprechend verändert. Dadurch ist es wieder möglich, die mittlere Leistung des blauen Subbands zugunsten des roten Subbands abzusenken, wobei die mittlere Leistung pro Kanal konstant bleibt. Danach erfolgt eine senderseitige Optimierung der Leistungsverteilung innerhalb dieses Subbands.

Bei der Konfiguration in Fig. 2 könnte aber ein zwischen beiden Werten der Signal-Rauschabstände liegender identischer Signal-Rauschabstand OSNR für beide Signale an ihren jeweiligen Empfängern Rx1, Rx2 erzielt werden, indem dafür gesorgt wird, dass Signale im roten Subband - Express-Kanäle EK - am Ausgang des zweiten Add-Drop-Moduls OADM2 ein besseres Signal-Rauschabstand OSNR aufweisen.

Daher könnte das oben beschriebene Verfahren dahingehend modifiziert werden, dass die in Stand der Technik angegebene Formel zur Berechnung der Leistungsverteilung dahingehend modifiziert wird, dass als Zielvorgabe nicht mehr identische Werte der Signal-Rauschabstände OSNR gefordert werden, sondern ein vorgegebenes Profil von denen. Dieses Profil muss von einem Netzplanungstool vorgegeben werden, das für diesen Zweck am besten einen Kennwert für die erwartete Qualitätsverschlechterung auf den von den Signalen zurückgelegten Streckenabschnitten berechnet. Dabei wird dann berücksichtigt, dass ein Signal in einem Kanal, der in einem nachfolgenden Streckenabschnitt eine stärkere Verschlechterung erfahren wird, diesen im Vergleich zu den anderen Kanälen mit besserem Signal-Rauschabstand verlassen muss. Mit andern Worten, es wird eine relative SNR-Anforderung eingeführt. Der Kennwert kann aus einer groben Abschätzung oder aber auch mit ausgefeilteren Methoden bestimmt werden. Hier können auch nichtlineare Fasereffekte eingehen.

Das erfindungsgemäße Verfahren kann weiter verfeinert werden, indem außer den Streckeneigenschaften auch Sender- und Empfängereigenschaften berücksichtigt werden. Es wird dann z. B. berücksichtigt, dass ein Signal ohne FEC (Forward Error Correction) einen besseren Signal-Rauschabstand OSNR benötigt als ein parallel übertragenes Signal, das eine FEC benützt.

Bei allen diesen Varianten kann - muss aber nicht - eine Methode verwendet werden, bei der direkt die dem Kanal überlagert Rauschanteile ASE (Amplified Spontaneous Emission) gemessen wird. Unter Umstände kann auch eine einfache Messung von Signalleistungen zur Bestimmung von mittleren Signalleistungen einer Gruppe von Kanälen genügen.

Ein wesentlicher Vorteil des erfindungsgemäßen Verfahrens ist darin zu sehen, dass diese Methode sowohl auf optische Netze als auch auf den darin enthaltenen Grenzfall einer Punkt-zu-Punkt-Verbindung anwendbar ist, da Preemphase-Schritte lokal d. h. an einem beliebigen Abschnitt eines Netzwerks gesteuert werden.

Allgemein und ausgehend von einem Verfahren zur Preemphase eines optischen Wellenlängenmultiplex-Signals, dessen Signale mit unterschiedlichen Wellenlängen in Gruppen B1, B2, B3, B4 zusammengefasst über Express-Kanäle sowie über Drop-Kanäle, Add-Kanäle oder Add-Drop-Kanäle einer Übertragungsstrecke LWL mit mehreren Abschnitten übertragen werden, erfolgen erfindungsgemäß mehrere Sub-Preemphase-Einstellungen der Gruppen B1, B2, B3, B4 von Signalen an Einspeisestellen NEi, OADMj (i≥1, j≥1) der Abschnitte der Übertragungsstrecke LWL derart, dass zur Erzielung von vorgegebenen mittleren Signal-Rauschabständen OSNR1, OSNR2, OSNR3, OSNR4 der verschiedenen Gruppen B1, B2, B3, B4 von Signalen an ihrer Terminierungsstellen die mittlere Leistung mindestens einer Gruppe B1, B2, B3, B4 von Signalen an mindestens einer mit der Gruppe B1 der Express-Kanäle gemeinsamen Einspeisestelle eines Abschnittes neu eingestellt wird.

Dieses Verfahren kann ebenfalls für zwei oder drei Gruppen B1, Bi (i>1) mit Express-Kanälen und anderen Kanälen verwendet werden, die entlang der Übertragungsstrecke LWL teilweise wie in vorigen Figuren 1 oder 2 mitübertragen werden. Ferner eignet sich auch das erfindungsgemäße Verfahren für eine beliebige Anzahl 4, 5, 6, etc von Gruppen von Kanälen Bi (i>1).

An der Einspeisestelle wird die mittlere Signalleistung einer bei einer folgenden Abzweigstelle abgezweigten oder terminierten Gruppe mit Drop-Kanälen oder Add-Drop-Kanälen zugunsten der mittleren Signalleistung einer weitergeführten Gruppe von Express-Kanälen gesenkt.

Die Neuaufteilung der Signalleistungen zwischen den Gruppen B1 B2, B3, B4 erfolgt in einspeisenden oder schaltenden Netzelementen NEi, OADMj mittels einer Signalleistungsregelung. Es können auch separate Mittel zur Signalleistungsregelung an diesen Stellen verwendet werden.

Zum Ausgleich der Signal-Rauschabstände an einer Terminierungsstelle einer der Gruppen B1, B2, B3, B4 von Kanälen wird eine zusätzliche kanal-individuelle Preemphase an ihrer Einspeisestelle durchgeführt. Dafür sind Methoden gemäß dem Stand der Technik verwendbar.

Die Vorgabe mittlerer Signal-Rauschabständen OSNR1, OSNR2, OSNR3, OSNR4 der verschiedenen Gruppen B1, B2, B3, B4 von Signalen an ihrer Terminierungsstellen werden von einem Netzwerkmanagement definiert.

Es werden zwei vorteilhafte Regelungsprotokolle zur Durchführung des erfindungsgemäßen Verfahren im Folgenden beschrieben, die zur Vorberechnung oder zur direkten Steuerung der Sub-Preemphase-Einstellungen - sowie der erforderlichen zusätzlichen kanal-individuellen Preemphase - mittels eines Datenpakets eingesetzt werden können.

Das Datenpaket wird aus einer Einspeisestelle über mehrere Abschnitte bis zu einer Terminierungsstelle beliebiger Express-Kanäle eines Netzwerks hin- und zurückgeführt werden. Das Datenpaket weist einen Zähler und mindestens zwei Markierungen der einzustellenden Preemphase-Schritten von Gruppen auf. Der Zähler steuert die Übertragung des Datenpakets und damit der Anfang und das Ende der Preemphase-Schritte. Die Markierungen dienen zur Aktivierung einer oder mehrerer Sub-Preemphase-Einstellungen von Gruppen von Kanälen sowie einer oder mehrerer kanal-individuellen Preemphase von Gruppen von Kanälen. Mehrere Regelungsprotokolle sind je nach Art der Kodierung des Zählers und/oder der Markierung realisierbar. Jedoch werden in der vorliegenden Erfindung nur zwei davon er läutert, die eine besondere schnelle und einfache Durchführung des Verfahrens ermöglichen.

Nach einer Durchführung des Verfahrens für einen Netzabschnitt, d. h. lokal zwischen der Einspeise- und der Terminierungsstelle beliebiger Express-Kanäle, wird das Datenpaket an einem weiteren Netzabschnitt weitergeleitet, bei dem weitere Preemphase-Schritte erfindungsgemäß gesteuert werden. Das Verfahren eignet sich für Netzabschnitte mit einer beliebigen Zahl von Abschnitten mit zwischengeschalteten Netzelementen wie Zwischenverstärkern, Add-Drop-Modulen, Filtern, etc.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 3:: ein Strukturbild zur schematischen Darstellung des ersten Regelungsprotokolls; und
- Fig. 4:: ein Strukturbild zur schematischen Darstellung des zweiten Regelungsprotokolls

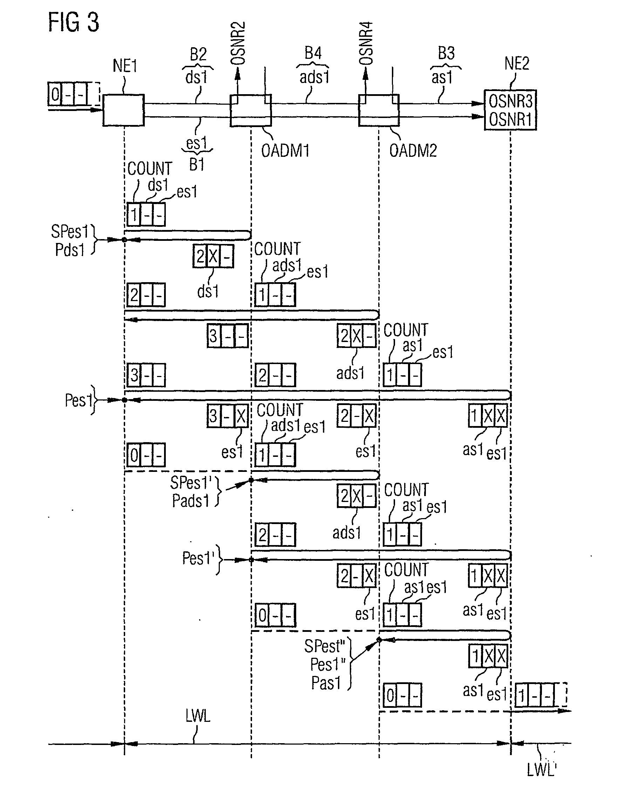

Im folgenden wird unter weiterer Bezugnahme auf die Funktionseinheiten der Fig. 3 das erste Regelungsprotokoll näher erläutert.

Der Zähler weist zwei funktionelle Aspekte auf. Einerseits signalisiert er mit dem Wert 0 dem empfangenden Netzelement, dass der vorhergehende Preemphase-Schritt abgeschlossen ist und das empfangende Netzelement die Steuerung der nächsten schrittes - Sub-Preemphase-Einstellung und kanal-individuelle Preemphase - übernehmen soll. Andererseits nimmt der Zähler während eines Preemphase-Schrittes positive Werte 1, 2, 3, etc an, wodurch nachfolgende Netzelement durch das steuernde Netzelement gesteuert werden können. Diese positiven Werte 1, 2, 3, etc bezeichnen ebenfalls die Anzahl der noch vom Datenpaket durchzulaufenden Abschnitte, über die das Datenpaket aufwärts über die Übertragungsstrecke LWL übertragen wird. Bei jedem durchgelaufenen Abschnitt wird der Zähler am ankommenden Netzelement um eins reduziert, bis er den Wert 1 beträgt. Am dortigen Netzelement wird das Datenpaket abschnittweise zurück zum ursprünglichen Netzelement geführt und dessen Zähler ebenfalls an jedem Netzelement wieder mit 2, 3, etc inkrementiert. Bei dieser rückwärtigen Übertragung wird jeweils eine Markierung für eine Gruppe aktiviert, falls diese Gruppe in dem Netzelement abgezweigt wird, d. h. z. B. diese Gruppe wird außerhalb der Übertragungsstrecke LWL irgendwo in einem externen Netzwerkszweig terminiert. An dieser Abzweigstelle werden möglicherweise die mittleren Signal-Rauschabstände der betroffenen Gruppe mit Drop-Kanäle zugunsten der mittleren Signal-Rauschabstände der Gruppe mit Express-Kanälen derart gesenkt, da die Express-Kanäle über eine längere Strecke als die Drop-Kanäle im Bezug auf der Übertragungsstrecke LWL übertragen werden.

Bei der Rückführung des Datenpakets und bei aktiver Markierung einer abgezweigten Gruppen von Signalen, wird jedoch die Markierung dieser Gruppe deaktiviert, wenn das Datenpaket in ein Netzelement zurückläuft, bei dem diese Gruppe von Signalen in die Übertragungsstrecke eingespeist wurde. Kommt nun das Datenpaket am ursprünglichen Netzelement an und die Markierung einer Gruppe mit Drop-, oder Add- oder Add-Drop-Kanälen ist noch aktiv, erfolgt eine Sub-Preemphase-Einstellung am ursprünglichen Netzelement für diese Gruppe und die Gruppe mit Express-Kanälen. Eine kanal-individuelle Preemphase der Gruppe mit Drop-, oder Add- oder Add-Drop-Kanälen wird ebenfalls durchgeführt. Mit diesem ersten Regelungsprotokoll erfolgt auch eine kanal-individuelle Preemphase der Gruppe mit Express-Kanäle, da das letzte Netzelement der Übertragungsstrecke als Terminierungsstelle der Gruppe von Express-Kanälen eine Aktivierung der Markierung im Datenpaket für diese Gruppe hervorruft und das Datenpaket die Strecke bis zum Sender durchläuft, ohne dass die Markierung der Express-Kanäle aufgehoben wird.

Empfängt ein Netzelement ein rückwärts übertragenes Datenpaket, dessen Zähler im Vergleich zu ursprünglichen aufwärts übertragenen Datenpaket unverändert ist, wird der Zähler auf dem Wert 0 gesetzt. Dabei ist der aktuelle Netzelement als Startpunkt oder Steuerelement für die aufwärtige Übertragung des Datenpakets auf dem nächstliegenden Netzelement verschoben, bei dem wenigstens eine Gruppe von Signalen aus der Übertragungsstrecke LWL abgezweigt wird. Der Zähler wird nochmals dort mit dem Wert 1 eingestellt und das gesamte bisher erläutete Regelungsprotokoll kann weiter durchgeführt werden. Der letzte Schritt des gesamten Regelungspiotokolls beendet bei dem/den letzten Abschnitten der Übertragungsstrecke LWL, bei dem Add-Kanäle mit den Express-Kanälen zusammen übertragen und anschließend terminiert werden.

Fig. 3 zeigt die verschiedenen Schritte dieses ersten Regelungsprotokolls für vier Gruppen B1, B2, B4, B3 von Signalen, die jeweils über Express-Kanäle es1 von einem ersten Netzelement NE1 zu einem zweiten Netzelement NE2, Drop-Kanäle ds1 von dem ersten Netzelement NE1 zu einem ersten Add-Drop-Modul OADM1, Add-Drop-Kanäle ads1 von dem ersten Add-Drop-Modul OADM1 zu einem zweiten Add-Drop-Modul OADM2 und Add-Kanäle adl von dem zweiten Add-Drop-Modul OADM2 zu dem zweiten Netzelement NE2 übertragen werden.

Am ersten Netzelement NE1 als Startpunkt wird der Zähler COUNT auf dem Wert 1 gesetzt - d. h. das Datenpaket wird über einen einzelnen Abschnitt übertragen - und damit wird das Datenpaket zu dem ersten Add-Drop-Modul OADM1 zugeführt. Nun wird das Datenpaket rückwärts übertragen und der Zähler COUNT wird daher auf dem Wert 2 inkrementiert. Aufgrund der Abzweigung der Gruppe B2 der Drop-Kanäle ds1 aus dem ersten Add-Drop-Modul OADM1 wird die Markierung X der Gruppe B2 der Drop-Kanäle ds1 aktiviert und das Datenpaket zurück zum ersten Netzelement NE1 geführt, wo eine erste Sub-Preemphase SPes1 für die Gruppen B1 der Express-Kanäle es1 - d. h. die mittleren Signalleistungen der Gruppen B1, B2 der Express-Kanäle es1 und der Drop-Kanäle ds1 neu eingestellt werden - sowie eine kanal-individuelle Preemphase Pds1 für die Gruppe B2 der Drop-Kanäle ds1 durchgeführt werden.

Das Datenpaket wird nochmals mit dem Zähler auf dem Wert 2 über zwei Abschnitte NE1, OADM1, OADM2 aufwärts übertragen. Bei dem zweiten Abschnitt OADM1, OADM2 über dem ersten Add-Drop-Modul OADM1 ist der Wert des Zählers COUNT auf 1 gesetzt. Nun wird das Datenpaket rückwärts übertragen und der Zähler COUNT wird daher auf dem Wert 2 inkrementiert. Aufgrund der Abzweigung der Gruppe B4 der Add-Drop-Kanäle ads1 aus dem zweiten Add-Drop-Modul OADM2 wird die Markierung X für die Gruppe B4 der Add-Drop-Kanäle ads1 aktiviert und das Datenpaket erst zurück zum ersten Add-Drop-Modul OADM1 geführt. Am ersten Add-Drop-Modul OADM1 wird für diese Kanäle eine Preemphase durchgeführt und die entsprechende Markierung X="-" deaktiviert. Der Zähler COUNT wird nun noch auf den Wert 3 inkrementiert, so dass dieser sich im Vergleich zu dem ursprünglichen Zähler COUNT=2 am Anfang des Hin- und Rücklaufens des Datenpakets über zwei Abschnitte bei Ankunft des Datenpakets am ersten Netzelement NE1 geändert hat. Am Startpunkt des Preemphase-Schrittes sind also keine Markierungen aktiv und daher werden keine Preemphase jeder Art durchgeführt.

Ein dritter Hin- und Rücklauf des Datenpakets mit nun einem Zähler COUNT=3 am Netzelement NE1 wird über die drei Abschnitte NE1, OADM1, OADM2, NE2 eingeleitet. Vor Rücklauf des Datenpakets vom Netzelement NE2 zum zweiten Add-Drop-Modul OADM2 werden zwei Markierungen für die Gruppen B1, B3 der Express-Kanäle es1 und der Add-Kanäle as1 aktiviert, die am Netzelement NE2 terminiert werden. Gemäß der vorigen Schrit ten des Regelungsprotokolls wird die Markierung X="-" für die Gruppe B3 der Add-Kanäle as1 schon am Add-Drop-Modul AODM2 gelöscht, die Markierung X für die Gruppe B1 der Express-Kanäle es1 aber nicht. Aufgrund der Terminierung der Gruppe B1 mit Express-Kanälen wird der Zähler bei Rücklauf aus dem zweiten Netzelement NE2 nicht inkrementiert, d. h. COUNT=1. Daher erfolgt bei Ankunft des Datenpakets am ersten Netzelement NE1 eine kanal-individuelle Preemphase Pes1 der Gruppe B1 von Signalen. Der Zähler COUNT beträgt außerdem den Wert 3, der identisch zu dem ursprünglichen Zähler COUNT=3 am Anfang der Hin- und Rückläufe des Datenpakets über die drei Abschnitte. Deshalb wird der Zähler auf den Wert 0 gesetzt. Dies signalisiert, dass das erste Netzelement die von ihm zu steuernden Preemphase-Schritte beendet hat. Mit diesem Wert wird nun ein Datenpaket an den ersten nachgeschalteten OADM1 geschickt, der anhand der Werte Null erkennt, dass er die Steuerung der nächsten Schrittes zu übernehmen hat. Der erste Add-Drop-Modul OADM1 gilt jetzt als Startpunkt oder Steuerelement für weitere Schritte des Regelungsprotokolls und löst weitere Preemphase-Schritte aus, indem es ein Datenpaket mit Wert 1 für den Zähler an den nachfolgenden Add-Drop-modul OADM2 schickt. Die Steuerung der nachfolgenden Schritte geschieht nun analog zu dem zuvor beschriebenen Verfahren.

In anderen Worten ist der erste Netzelement NE1 für weitere Regelungen deaktiviert und sendet das Datenpaket zum ersten Add-Drop-Modul OADM1, wo der Zähler COUNT auf dem Wert 1 gesetzt wird. Der erste Add-Drop-Modul OADM1 gilt jetzt als Startpunkt für weitere Schritte des Regelungsprotokolls.

Das Datenpaket wird über einen einzelnen Abschnitt von dem ersten Add-Drop-Modul OADM1 zum zweiten Add-Drop-Modul OADM2 übertragen. Nun wird das Datenpaket rückwärts übertragen und der Zähler COUNT wird daher auf dem Wert 2 inkrementiert. Aufgrund der Abzweigung der Gruppe B4 der Add-Drop-Kanäle ads1 aus dem zweiten Add-Drop-Modul OADM2 wird die Markierung X der Gruppe B4 der Add-Drop-Kanäle ads1 aktiviert und das Datenpaket zurück zum ersten Add-Drop-Modul OADM1 geführt, wo eine zweite Sub-Preemphase SPes1' für die Gruppe B1 der Express-Kanäle es1 - d. h. die mittleren Signalleistungen der Gruppen B1, B4 mit Express-Kanälen es1 und Add-Drop-Kanälen ads1 - sowie eine kanal-individuelle Preemphase Pads1 für die Gruppe B4 mit Add-Drop-Kanälen ads1 durchgeführt werden.

Ein neuer Hin- und Rücklauf des Datenpakets schließt sich nun über die zwei letzten Abschnitte OADM1, OADM2, NE2 an. Zwei Markierungen X für beide am zweiten Netzelement NE2 terminierte Gruppen B1, B2 mit den Express-Kanäle es1 und den Drop-Kanäle ds1 werden aktiviert. Aufgrund der Terminierung der Gruppe B1 mit Express-Kanälen wird der Zähler bei Rücklauf aus dem zweiten Netzelement NE2 nicht inkrementiert, d. h. COUNT=1. Die Markierung für die Gruppe B2 mit den Drop-Kanäle ds1 fällt beim rückwärtigen Durchgang des Datenpakets im ersten Add-Drop-Modul OADM1 aus, die Markierung für die Gruppe B1 mit den Express-Kanälen es1 aber nicht. Daher könnte eine neue kanal-individuelle Preemphase Pes1' der Gruppe B1 von Signalen am ersten Add-Drop-Modul OADM1 durchgeführt werden, wenn das erste Add-Drop-Modul OADM1 es ermöglicht.

Da der Zähler COUNT den Wert 2 beträgt, der identisch zu dem ursprünglichen Zählerwert COUNT=2 am Anfang der Hin- und Rückläufe des Datenpakets über die zwei letzten Abschnitte, wird der Zähler auf dem Wert 0 gesetzt.

Anschließend wird das Datenpaket zum zweiten Add-Drop-Modul OADM2 gesendet, dessen Zähler nun 1 beträgt und aufgrund der Terminierung der Gruppe B1 mit Express-Kanälen bei Rücklauf aus dem zweiten Netzelement NE2 nicht inkrementiert wird. Zwei Markierungen X für die Gruppen B1, B3 mit Express-Kanälen es1 und den Add-Kanälen as1 werden aktiviert und bei Ankunft am zweiten Add-Drop-Modul OADM2 erfolgen eine dritte Sub-Preemphase SPes1" - d. h. die mittleren Signalleistungen der Gruppen B1, B3 mit Express-Kanälen es1 und Add-Kanälen as1 - sowie eine kanal-individuelle Preemphase Pas1 für die Gruppe B3 mit den Add-Kanälen as1. Die eine kanalindividuelle Preemphase Pes1" für die Gruppe B3 von Express-Kanälen es1 könnte dabei durchgeführt werden, wenn das zweite Add-Drop-Modul OADM2 es gestattet.

Das Regelungsprotokoll ist beendet, wenn das zweite Netzelement NE2 vom zweiten Add-Drop-Modul OADM2 ein Datenpaket mit Zähler COUNT=0 erhält. Folgt auf das den Netzabschnitt terminierende Netzelement NE2 ein weiterer Netzabschnitt, kann der Empfang eines Datenpakets mit einem Zähler COUNT=0 an dem zweiten Netzelement NE2 die Preemphase einer weiteren Übertragungsstrecke LWL' auslösen.

Eine weitere Preemphase könnte auch je nach Infrastruktur des Netzwerks aus einem anderen Netzelement als dem zweiten Netzelement NE2 starten.

Es wird hier darauf aufmerksam gemacht, dass dabei zwei Markierungen zur Aktivierung oder Deaktivierung der Preemphasen KIPi, SPlj (i≥1, j>1) der vier Gruppen ausreichen, da, aus Klarheitsgründen in diesem ersten Ausführungsbeispiel, sich die verschiedenen Drop- oder Add- oder Add-Drop-Kanälen aus den Gruppen B2, B3, B4 von Signalen pro Abschnitt nicht überlappen. Erhöht sich die Anzahl der verschiedenen übertragenen Kanälen pro Abschnitt, müssen genauso viele Markierungen im Datenpaket verwendet werden.

Dem ersten Netzelement NE1 oder dem zweiten Netzelement NE2 können ferner weitere Netzelemente oder Add-Drop-Module vor- bzw. nachgeschaltet werden. Das Regelungsprotokoll ist davon unabhängig aufgrund des übertragenen Datenpakets zur Ein- oder Ausschaltung eines aktiven Netzelements zum Beginn der Preemphase-Schritte durchgeführt.

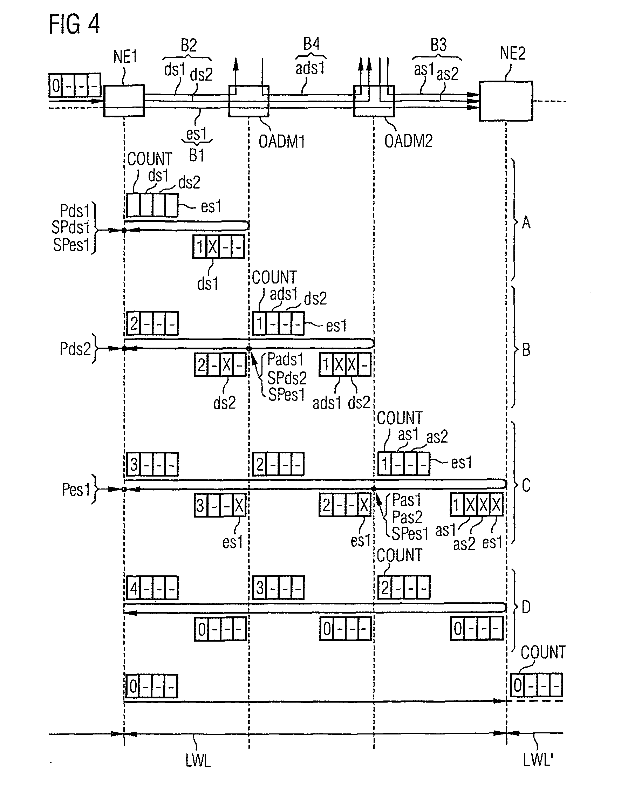

In Fig. 4 ist ein zweites Regelungsprotokoll dargestellt, bei dem zwei zusätzliche übertragene Gruppen B2, B3 von weiteren Drop-Kanälen ds2 zwischen dem ersten Netzelement und dem zweiten Add-Drop-Modul OADM2 und von weiteren Add-Kanälen as2 zwischen dem zweiten Add-Drop-Modul OADM2 und dem zweiten Netzelement NE2 gemäß Fig. 3 hinzugefügt werden. Pro Abschnitt werden also bis zu drei Kategorien von Kanälen übertragen. D. h., es werden also drei Markierungen im Datenpaket verwendet.

Der wesentliche Unterschied zu dem ersten Regelungsprotokoll liegt daran, dass beim Rücklauf eines Datenpakets aus einem Abschnittende z. B. aus dem zweiten Add-Drop-Modul OADM2 eine Sub-Preemphase-Einstellung SPes1, SPds2 für die Express-Kanäle es1 und für die am diesem Abschnittende OADM2 abgezweigten d. h. markierten Kanäle - hier ads1 und ds2 - sofort am Abschnittanfang - hier am ersten Add-Drop-Modul OADM1 - durchgeführt wird. Werden noch Kanäle - hier ads1 - am Abschnittanfang OADM1 eingespeist, erfolgt dazu eine kanalindividuelle Preemphase Pads1 dieser Kanäle, die ebenfalls eine Deaktivierung der mit dem Datenpaket rücklaufenden Markierung für diese Gruppe von Kanälen ads1 hervorruft. Weitere kanal-individuelle Preemphase - z. B. Pds2 - einer Gruppe von Kanälen - z. B. ds2 - werden am mit den Express-Kanälen gemeinsamen Einspeistelle durchgeführt.

Der Zähler COUNT eines auf- und rückwärtigen übertragenen Datenpakets wird generell im Bezug auf Inkrementierung gemäß Fig. 3 identisch eingestellt. Der Wert NULL tritt aber erst auf, wenn die Preemphase für den gesamten Netzabschnitt abgeschlossen ist, da sämtliche Preemphase-Schritte für den entsprechenden Netzabschnitt vom Netzelement an dessen Anfang gesteuert werden. Nach Abschluss der Preemphase wird das Datenpaket mit dem Wert NULL über die nun drei geregelten Abschnitte aufwärts zur Initialisierung eines oder mehrerer weiteren Netzabschnitte LWL' weitergeleitet werden.

Mit dem zweiten Regelungsprotokoll werden effektiv nur drei Hin- und Rückläufe des Datenpakets über ein, zwei und drei Abschnitte benötigt, um alle Sub-Preemphase und kanalindividuelle Preemphase der Gruppen B1, B2, B3, B4 von Signalen in den Kanälen es1, ds1, ds2, ads1, as1, as2 durchzuführen. Bei dem vierten Hin- und Rücklauf bzw. dem fünften Hinlaufe des Datenpakets erfolgt keine Preemphase.

Gemäß der zweiten Protokollsregelung werden also die zusammengefassten Einstellungen A, B, C, D gemäß Fig.5 schrittweise derart durchgeführt:
A) Bei einem im ersten Abschnitt NE1, OADM1 rückgewonnen Zähler COUNT=1 und einer Markierung für die im ersten Add-Drop-Modul OADM1 abgezweigte Drop-Kanäle ds1 erfolgt im ersten Netzelement NE1 eine kanal-individuelle Preemphase Pds1 der Drop-Kanäle ds1 mit zwei Sub-Preemphase-Einstellungen SPds2, SPes1 der Drop-Kanäle ds2 und der Express-Kanäle es1.
B) Bei einem im zweiten Abschnitt OADM1, OADM2 rückgewonnen Zähler COUNT=1 und einer Markierung für die im zweiten Add-Drop-Modul OADM2 abgezweigte Add-Drop-Kanäle ads1 und Drop-Kanäle ds2 erfolgt im ersten Add-Drop-Modul OADM1 eine kanal-individuelle Preemphase Pads1 der Add-Drop-Kanäle ads1 mit zwei Sub-Preemphase-Einstellungen SPds2, SPes1 der Drop-Kanäle ds2 und der Express-Kanäle es1. Weiterhin wird der Zähler im rückgelaufenen Datenpaket auf 2 gesetzt und die Markierung "-" der schon behandelten Kanäle ads1 gelöscht. Am ersten Netzelement NE1 wird die kanal-individuelle Preemphase Pds2 der Drop-Kanäle ds2 durchgeführt. Keine weitere Sub-Preemphase-Einstellungen werden vorgenommen.
C) Bei einem im dritten Abschnitt OADM2, NE2 rückgewonnen Zähler COUNT=1 und einer Markierung für die im zweiten Netzelement abgezweigte bzw. terminierte Add-Kanäle as1, as2 und Express-Kanäle es1 erfolgt im zweiten Add-Drop-Modul OADM2 zwei kanal-individuelle Preemphase Pas1, Pas2 der Add-Kanäle as1, as2 mit einer Sub-Preemphase-Einstellungen SPes1 der Express-Kanäle es1. Markierungen der Add-Kanäle as1, as2 werden im zweiten Add-Drop-Modul OADM2 für die weitere rückläufige Übertragung des Datenpakets gelöscht. Aufgrund der Markierung der Express-Kanäle es1 am ersten Netzelement NE1 erfolgt eine kanalindividuelle Preemphase Pes1 für die Signale der Express-Kanäle es1.
D) Der Zähler wird auf 4 gesetzt, damit kommt das Datenpaket mit einem Zählerwert von 2 am zweiten Netzelement NE2. Dies schaltet die Beendigung aller Preemphase-Schritte für die drei Abschnitte NE1, OADM1, OADM2, NE2. Der Zähler COUNT wird auf null gesetzt und das Datenpaket kann einem weiteren Übertragungsstrecke LWL' weitergeleitet werden.

Zur Einsetzung des zweiten Regelungsprotokolls in eine software-orientierte Lösung können folgende Regeln zusammengefasst werden:
- Ein Netzelement, das ein Datenpaket mit Zähler COUNT=1 in Vorwärtsrichtung empfängt, schickt Werte des Leistungsspektrums bei unverändertem Zähler zurück zum Beginn des Links und markiert Gruppe von Kanälen, die an diesem Netzelement terminiert werden.
- Ein Netzelement, das ein Datenpaket mit Zähler größer als 1 in Vorwärtsrichtung empfängt, erniedrigt den Zähler um 1 und reicht das Datenpaket an das nächste Netzelement weiter.
- Ein Netzelement, das ein Datenpaket in Rückwärtsrichtung empfängt, erhöht den Zähler um 1 und reicht das Datenpaket an das vorhergehende Netzelement weiter. Dabei wird für alle markierten Gruppe von Kanälen, die an dieser Stelle eingefügt werden, eine kanal-individuelle Preemphase ausgeführt und die entsprechenden Markierungen werden gelöscht.
- Für alle nicht markierten Gruppen von Kanälen oder nicht an dieser Stelle eingefügten Gruppen von Kanälen erfolgt nur eine Anpassung der mittleren Leistung, falls der Zähler COUNT den Wert 1 beträgt.
- Beträgt der Zähler COUNT nicht den Wert 1, wird nur eine kanal-individuelle Preemphase für markierte und an dieser Stelle eingefügte Gruppen von Kanälen durchgeführt. Es erfolgt keine Veränderung der mittleren Leistung pro Gruppe.
- Empfängt ein Netzelement, an dem alle Gruppe von Kanälen terminiert werden, ein Datenpaket in Vorwärtsrichtung mit Zähler COUNT=2, schickt es ein Paket mit Zähler COUNT=0 und deaktivierten Markierungen an das vorangehende Netzelement.
- Empfängt ein Netzelement, das nicht das erste Element eines Netzabschnitts - als Netzabschnitt wird hier ein Teil LWL, LWL' eines Netzes bezeichnet, der durch zwei Netzelemente begrenzt wird, an denen keine Gruppe von Kanälen durchgeschleift werden - ist, ein Datenpaket mit Zähler COUNT=0 in Vorwärts- oder Rückwärtsrichtung, reicht es dieses ohne Veränderung an das vorhergehende Netzelement weiter.
- Das Netzelement am Anfang des Netzabschnittes erhöht abschnittsweise von Preemphase-Schritt zu Preemphase-Schritt den Zähler COUNT um den Wert 1. Empfängt es ein Datenpaket mit Zähler COUNT=0, ist die Preemphase für diesen Netzabschnitt abgeschlossen.
- Empfängt ein Netzelement, an dem alle Gruppen von Kanälen terminiert werden - am Ende des betrachteten Netzabschnitts LWL -, ein Datenpaket mit Zähler COUNT=0 in Vorwärtsrichtung, initiiert es einen Preemphase-Schritt für den nachfolgenden Netzabschnitt LWL'.

Aus Klarheitsgründen beschreiben die Ausführungsbeispiele der Erfindung zwei Fälle mit vier oder sechs unterschiedliche Gruppen von Kanälen über einem Netzabschnitt mit drei Abschnitten. Es wäre jedoch einem Fachmann implizit, aus diesen vereinfachten Ausführungen dieses Verfahren für eine beliebige Anzahl der Gruppen von Kanälen und der Abschnitte anzupassen.

## Patentansprüche

1. Verfahren zur Preemphase eines optischen Wellenlängenmultiplex-Signals, dessen Signale mit unterschiedlichen Wellenlängen in Gruppen (B1, B2, B3, 84) zusammengefasst über Express-Kanäle sowie über Drop-Kanäle, Add-Kanäle oder Add-Drop-Kanäle in einer Übertragungsstrecke (LWL) mit mehreren Abschnitten und Netzelementen (NE) wie Einspeisestellen, Abzweigstellen (OADM) und Terminierungsstellen übertragen werden,
wobei die Express-Kanäle von einem ersten Netzelement (NE1) zu einem zweiten Netzelement (NE2) übertragen werden während Drop-Kanäle, Add-Kanäle oder Add-Drop-Kanäle auch an zwischen dem ersten und zweiten Netzelement angeordneten Abzweigstellen (OADM) eingespeist oder terminiert werden,
**dadurch gekennzeichnet,**
**dass** in einem Netzelement bei Terminierung mindestens einer Gruppe (B1) von Signalen an deren Einspeisestelle (NE, OADM) eine mittlere und eine kanal-individuelle Leistungseinstellung der Signale dieser Gruppe erfolgt, so dass vorgegebene Signal-Rauschabstände (OSNR1) erzielt werden, während für die nicht terminierten Gruppen (B2, B3, B4) von Signalen die Einstellung einer mittleren Leistung an einem vorhergehenden Netzelement (NE, OADM) erfolgt.

2. Verfahren nach Anspruch 1,
**dadurch gekennzeichnet,**
**dass** an der Einspeisestelle die mittlere Signalleistung einer bei einer folgenden Abzweigstelle abgezweigten oder terminierten Gruppe mit Drop-Kanälen oder Add-Drop-Kanälen zugunsten der mittleren Signalleistung einer weitergeführten Gruppe von Express-Kanälen verringert wird.

3. Verfahren nach Anspruch 1 oder 2,
**dadurch gekennzeichnet,**
**dass** die Neuaufteilung der mittleren Signalleistungen zwischen den Gruppen (B1, B2, B3, B4) in einspeisenden oder schaltenden Netzelementen (NE) mit einer Signalleistungsregelung erfolgt.

4. Verfahren nach einem der vorhergehenden Ansprüche,
**dadurch gekennzeichnet,**
**dass** die Vorgabe mittlerer Signal-Rauschabstände (OSNR1, OSNR2, OSNR3, OSNR4) oder Unterschiede der Signal-Rauschabstände der verschiedenen Gruppen (B1, B2, B3, B4) von Signalen an ihrer Terminierungsstellen von einem Netzwerkmanagementsystem vorgegeben werden.

5. Verfahren nach einem der vorhergehenden Ansprüche 1 bis 4,
**dadurch gekennzeichnet,**
**dass** zu Bestimmung der vorzunehmenden Leistungsänderungen zunächst hypothetisch davon ausgegangen wird, dass alle Kanäle an der entsprechenden Stelle individuell verändert werden können und aus dieser Vorgabe dann die mittlere Leistungsänderung der Kanalgruppe berechnet wird.

6. Verfahren nach einem der vorhergehenden Ansprüche,
**dadurch gekennzeichnet,**
**dass** zur Steuerung einer der Sub-Preemphase-Eintellungen ein Netzelement (NEi, OADMj) mit Hilfe eines Datenpakets aktiviert wird, das von der ersten Einspeisestelle (NE0) zu den anderen Netzelementen (NEi, OADMj) abschnittweise hin- und zurück übertragen wird und das eine Markierung (X) der Einspeise- und Terminierungsstellen jeder der Gruppen (B1, B2, B3, B4) von Signalen enthält.

7. Verfahren nach Anspruch 6,
**dadurch gekennzeichnet,**
**dass** bei einem Netzelement (NEi, OADMj) das Datenpaket zur Steuerung einer der zusätzlichen kanal-individuellen Preemphase einer der Gruppen (B1, B2, B3, B4) von Signalen dient.

8. Verfahren nach Anspruch 6 oder 7,
**dadurch gekennzeichnet,**
**dass** zur Steuerung der Übertragungsrichtung und der Reichweite des Datenpakets zwischen den Netzelementen (NEi, OADMj) ein Zähler (COUNT) in dem Datenpaket initialisiert, inkrementiert oder verringert wird.

9. Verfahren nach einem der vorhergehenden Ansprüche,
**dadurch gekennzeichnet,**
**dass** je nach Kodierungsart des Zählers (COUNT) und einer Markierung (X) zur Abzweigung einer Gruppe (B1, B2, B3, B4) ein an einem selektierten steuernden Netzelement vorgesehenen Regelungsprotokoll zur Steuerung von Preemphase-Schritten mit Sub-Preemphase-Eintellungen und/oder der zusätzlichen kanalindividuellen Preemphase der Gruppen (B1, B2, B3, B4) entlang der Übertragungsstrecke (LWL) gewählt wird.

10. Verfahren nach Anspruch 9,
**dadurch gekennzeichnet,**
**dass** bei Empfang eines Datenpakets, dessen Zähler (COUNT) den Wert "0" beträgt, ein Netzelement (NE1, OADM1, OADM2...) die Steuerung der Preemphase-Schritten für seine nachfolgenden Netzabschnitte übernimmt und
**dass** dabei der Zähler (COUNT) auf den Wert 1 inkrementiert wird.

11. Verfahren nach Anspruch 9 oder 10,
**dadurch gekennzeichnet,**
**dass** bei Empfang eines Datenpakets, dessen Zähler (COUNT) den Wert "1" beträgt, an einem Netzelement (NE1, OADM1, OADM2...) ein Spektrum der Signale sowie das Datenpaket aus dem nächstliegenden Netzelement (OADM1, OADM2, NE2) entlang der Übertragungsstrecke (LWL) zurück gesendet werden
und **dass** beim rückwärtigen Durchlauf des Datenpakets durch je ein Netzelement (NE2, OADM2, OADM1) ohne Terminierungsstelle für alle dortigen Gruppen von Kanälen der Zähler (COUNT) um den Wert 1 erhöht wird, ansonsten unverändert bleibt.

12. Verfahren nach Anspruch 11,
**dadurch gekennzeichnet,**
**dass** beim unveränderten Zähler (COUNT) das Datenpaket in eine entgegengesetzte Richtung übertragen wird.

13. Verfahren nach einem der Ansprüche 10 bis 12,
**dadurch gekennzeichnet,**
**dass** an einem der Netzelemente (OADM1, OADM2, NE2) mit einer Terminierung mindestens einer der Gruppen von Kanälen eine Markierung (X) im übertragenem Datenpaket für diese Gruppe(n) aktiviert wird und
**dass** die Markierung (X) für eine Gruppe an der Einspeisestelle derselben Gruppe beim Rücklauf des Datenpakets gelöscht wird.

14. Verfahren nach einem der Ansprüche 10 bis 13,
**dadurch gekennzeichnet,**
**dass** bei Empfang eines Datenpakets, dessen Zähler (COUNT) einen höheren Wert als 1 beträgt, an einem Netzelement (NE1, OADM1, OADM2...) der Zähler (COUNT) des vorwärts übertragenen - d. h. in Richtung vom ersten Netzelement (NE1) bis zum zweiten Netzelement (NE2) - Datenpakets um den Wert 1 erniedrigt wird, wenn dabei mindestens eine Gruppe von Kanälen nicht terminiert d.h. durchgelassen oder eingespeist wird.

15. Verfahren nach einem der Ansprüche 10 bis 14,
**dadurch gekennzeichnet,**
**dass** bei Empfang eines Datenpakets, dessen Zähler (COUNT) einen höheren Wert als 1 beträgt, an einem Netzelement (NE1, OADM1, OADM2...) der Zähler (COUNT) des rückwärts übertragenen - d. h. in Richtung vom zweiten Netzelement (NE2) bis zum ersten Netzelement (NE1) - Datenpakets um den Wert 1 erhöht wird und
**dass** beim Ankunft des rückwärts übertragenen Datenpakets am ersten steuernden Netzelement (NE1) der Zähler (COUNT) unverändert bleibt.

16. Verfahren nach einem der Ansprüche 10 bis 15,
**dadurch gekennzeichnet,**
**dass** bei Ankunft des rückwärts übertragenen Datenpakets am ersten steuernden Netzelement (NE1) mit einem Zähler (COUNT), dessen Wert gleich dem Wert am selben Netzelement (NE1) bei der vorigen aufwärtigen Übertragung des Datenpakets ist, der Zähler auf den Wert 0 gesetzt wird,
**dass** das Datenpaket aufwärts zum nächstliegenden Netzelement (OADM2) übertragen wird,
**dass** der Zähler (COUNT) auf den Wert 1 inkrementiert wird und damit der nächstliegende Netzelement (NE2) als neu steuernder Netzelement zur Steuerung weiterer Preemphase-Schritte definiert wird.

17. Verfahren nach einem der Ansprüche 10 bis 16,
**dadurch gekennzeichnet,**
**dass** Preemphase-Schritte am steuernden Netzelement bei einer Gruppe von Kanälen, für die eine Markierung (X) dort aktiviert ist, durchgeführt werden.

18. Verfahren nach Anspruch 9,
**dadurch gekennzeichnet,**
**dass** die Preemphase-Schritte an unterschiedlichen selektierten steuernden Netzelementen während der Übertragung des Datenpakets innerhalb der Übertragungsstrecke (LWL) gesteuert werden.

19. Verfahren nach Anspruch 18,
**dadurch gekennzeichnet,**
**dass** ein Netzelement, das ein Datenpaket mit Zähler (COUNT) mit dem Wert "1" in Vorwärtsrichtung empfängt, Werte des Leistungsspektrums bei unverändertem Zähler zum Beginn der übertragungsstrecke (LWL) zurück sendet und Gruppe von Kanälen markiert, die an diesem Netzelement terminiert werden.

20. Verfahren nach Anspruch 18 oder 19,
**dadurch gekennzeichnet,**
**dass** ein Netzelement, das ein Datenpaket mit einem Wert des Zähler (COUNT) größer als "1" in Vorwärtsrichtung empfängt, den Zähler (COUNT) um den Wert "1" erniedrigt und das Datenpaket an das nächste Netzelement weiter reicht.

21. Verfahren nach einem der Ansprüche 18 bis 20,
**dadurch gekennzeichnet,**
**dass** ein Netzelement, das ein Datenpaket in Rückwärtsrichtung empfängt, den Zähler (COUNT) um den Wert "1" erhöht und das Datenpaket an das vorhergehende Netzelement weiter reicht.

22. Verfahren nach Anspruch 21,
**dadurch gekennzeichnet,**
**dass** für alle markierten Gruppe von Kanälen, die an den Netzelement eingefügt werden, eine kanal-individuelle Preemphase ausgeführt wird und ihre entsprechenden Markierungen gelöscht werden.

23. Verfahren nach einem der Ansprüche 18 bis 22,
**dadurch gekennzeichnet,**
**dass** für alle nicht markierten Gruppen von Kanälen oder nicht an dem Netzelement eingefügten Gruppen von Kanälen eine Anpassung der mittleren Leistung erfolgt, falls der Zähler (COUNT) den Wert 1 beträgt.

24. Verfahren nach einem der Ansprüche 19 bis 23,
**dadurch gekennzeichnet,**
**dass**, falls der Wert des Zählers (COUNT) nicht "1" beträgt, eine kanal-individuelle Preemphase für markierte und an dem Netzelement eingefügte Gruppen von Kanälen durchgeführt wird.

25. Verfahren nach Anspruch 24,
**dadurch gekennzeichnet,**
**dass** die mittlere Leistung pro Gruppe konstant bleibt.

26. Verfahren nach einem der Ansprüche 19 bis 25,
**dadurch gekennzeichnet,**
**dass** ein Netzelement, an dem alle Gruppe von Kanälen terminiert werden und das ein Datenpaket in Vorwärtsrichtung mit Zähler (COUNT) bei dem Wert "2" empfängt, ein Datenpaket mit Zähler (COUNT) bei dem Wert "0" sendet und Markierungen an das vorangehende Netzelement deaktiviert.

27. Verfahren nach einem der Ansprüche 19 bis 26,
**dadurch gekennzeichnet,**
**dass** ein Netzelement, das nicht das erste Element eines Netzabschnitts - an dem keine Gruppe von Kanälen durchgeschleift werden - ist und das ein Datenpaket mit Zähler (COUNT) bei dem Wert "0" in Vorwärts- oder Rückwärtsrichtung empfängt, dieses ohne Veränderung an das vorhergehende Netzelement weiter reicht.

28. Verfahren nach einem der Ansprüche 19 bis 27,
**dadurch gekennzeichnet,**
**dass** sich bei dem Netzelement am Anfang des Netzabschnittes abschnittsweise von einem Preemphase-Schritt zu einem anderen Preemphase-Schritt der Wert des Zählers (COUNT) um "1" erhöht, bis der Empfang eines Datenpakets mit Wert "0" des Zähler (COUNT) den Abschluss der Preemphase für diesen Netzabschnitt signalisiert.

29. Verfahren nach einem der Ansprüche 19 bis 28,
**dadurch gekennzeichnet,**
**dass** ein Netzelement, an dem alle Gruppen von Kanälen vorzugsweise am Ende des betrachteten Netzabschnitts LWL terminiert werden und das ein Datenpaket mit Zähler (COUNT) bei dem Wert "0" in Vorwärtsrichtung empfängt, einen oder weitere Preemphase-Schritte für den nachfolgenden Netzabschnitt (LWL') initiiert.

## Claims

1. Method for the pre-emphasis of an optical wavelength division multiplexing signal, the signals of which with different wave lengths are combined in groups (B1, B2, B3, B4) and are transmitted via express channels as well as via drop channels, add channels or add-drop channels in a transmission link (LWL) with several sections and network elements (NE) such as input points, branch points (OADM) and termination points,
whereby the express channels are transferred from a first network element (NE1) to a second network element (NE2) while drop channels, add channels or add-drop channels are also input or terminated at branch points (OADM) arranged between the first and second network elements,
**characterised in that**,
in a network element at the termination of at least one group (B1) of signals at their input point (NE, OADM) the average and channel individual power setting of the signals of this group are adjusted, so that preset signal-to-noise ratios (OSNR1) are achieved, while for the non-terminated groups (B2, B3, B4) of signals, average power is set at a preceding network element (NE, OADM).

2. Method according to claim 1,
**characterised in that**,
at the input point, the average signal power of a group with drop channels or add-drop channels, which group is branched or terminated at a subsequent branch point, is reduced in favour of the average signal power of an onwards routed group of express channels.

3. Method according to claim 1 or 2,
**characterised in that**,
the average signal powers are redistributed between the groups (B1, B2, B3, B4) in inputting or switching network elements (NE) using a signal power regulator.

4. Method according to one of the preceding claims,
**characterised in that**,
the specification of the average signal-to-noise ratios (OSNR1, OSNR2, OSNR3, OSNR4) or differences of the signal-to-noise ratios of the different groups (B1, B2, B3, B4) of signals at their termination points are predetermined by a network management system.

5. Method according to one of the preceding claims 1 to 4,
**characterised in that**,
to determine the power modifications that are to be made, it is first hypothetically assumed that all channels can be changed individually at the corresponding point and that the average power modification of the channel group can then be calculated from this specification.

6. Method according to one of the preceding claims,
**characterised in that**,
to control one of the sub-pre-emphasis settings, a network element (NEi, OADMj) is activated with the aid of a data packet, which data packet is transmitted bidirectionally in sections from the first input point (NE0) to the other network elements (NEi, OADMj) and which data packet contains a marker (X) of the input and termination points of each of the groups (B1, B2, B3, B4) of signals.

7. Method according to claim 6,
**characterised in that**,
at a network element (NEi, OADMj) the data packet is used to control one of the additional channel individual pre-emphasis of one of the groups (B1, B2, B3, B4) of signals.

8. Method according to claim 6 or 7,
**characterised in that**,
to control the transmission direction and the range of the data packet between the network elements (NEi, OADMj), a counter (COUNT) in the data packet is initialised, incremented or decremented.

9. Method according to one of the preceding claims,
**characterised in that**,
depending on the type of encoding of the counter (COUNT) and of a marker (X) for the branching of a group (B1, B2, B3, B4), a regulation protocol provided at a selected controlling network element for controlling pre-emphasis steps with sub-pre-emphasis settings and/or the additional channel-individual pre-emphasis of the groups (B1, B2, B3, B4) along the transmission link (LWL) is selected.

10. Method according to claim 9,
**characterised in that**,
on receipt of a data packet, the counter (COUNT) of which amounts to the value "0", a network element (NEI, OADM1, OADM2) assumes the control of the pre-emphasis steps for its subsequent network sections and that the counter (COUNT) is thereby incremented to the value 1.

11. Method according to claim 9 or 10,
**characterised in that**,
on receipt of a data packet, the counter (COUNT) of which amounts to the value "1", a spectrum of the signals as well as the data packet from the nearest network element (OADM1, OADM2, NE2) are sent back along the transmission link (LWL) to a network element (NEI, OADM1, OADM2),
and **in that** during the backwards passage of the data packet through each network element (NE2, OADM2, OADM1) without a termination point, for all groups of channels there the counter (COUNT) is incremented by the value 1, and otherwise remains unchanged.

12. Method according to claim 11,
**characterised in that**,
if the counter (COUNT) remains unchanged, the data packet is transmitted in an opposite direction.

13. Method according to one of claims 10 to 12,
**characterised in that**,
at one of the network elements (OADM1, OADM2, NE2) with a termination of at least one of the groups of channels, a marker (X) is activated in the transmitted data packet for this (these) group(s) and **in that**
when the data packet returns, the marker (X) for a group is deleted at the input point of the same group.

14. Method according to one of claims 10 to 13,
**characterised in that**,
when a data packet is received, the counter (COUNT) of which amounts to a value greater than 1, at a network element (NE1, OADM1, OADM2) the counter (COUNT) of the forward transmitted data packet - i.e. in the direction from the first network element (NE1) to the second network element (NE2) - is decremented by the value 1, if thereby at least one group of channels is not terminated i.e. let through or input.

15. Method according to one of claims 10 to 14,
**characterised in that**,
on receipt of a data packet, the counter (COUNT) of which amounts to a value greater than 1, at a network element (NE1, OADM1, OADM2 ...) the counter (COUNT) of the backwards transmitted data packet - i.e. in the direction from the second network element (NE2) to the first network element (NE1) - is incremented by the value of 1 and **in that**
when the backwards transmitted data packet is received at the first controlling network element (NE1) the counter (COUNT) remains unchanged.

16. Method according to one of claims 10 to 15,
**characterised in that**,
on arrival of the backwards transmitted data packet at the first controlling network element (NE1) with a counter (COUNT), the value of which is equal to the value at the same network element (NE1) when the data packet was transmitted upstream, the counter is set to the value 0,
**in that** the data packet is transmitted upstream to the nearest network element (OADM2),
**in that** the counter (COUNT) is incremented to the value 1 and hence the nearest network element (NE2) is defined as a new controlling network element for the control of further pre-emphasis steps.

17. Method according to one of claims 10 to 16,
**characterised in that**,
pre-emphasis steps are carried out at the controlling network element for a group of channels, for which a marker (X) is activated there.

18. Method according to claim 9,
**characterised in that**,
the pre-emphasis steps are controlled at different selected controlling network elements during the transmission of the data packet within the transmission link (LWL).

19. Method according to claim 18,
**characterised in that**,
a network element, which receives a data packet with a counter (COUNT) with the value "1" in a forward direction, sends back values of the power spectrum to the beginning of the transmission link (LWL) when the counter is unchanged and marks the group of channels which are terminated at this network element.

20. Method according to claim 18 or 19,
**characterised in that**,
a network element, which receives a data packet with counter (COUNT) having a value greater than "1" in a forward direction, decrements the counter (COUNT) by the value "1" and forwards the data packet to the next network element.

21. Method according to one of the claims 18 to 20,
**characterised in that**,
a network element, which receives a data packet in the reverse direction, increments the counter (COUNT) by the value "1" and forwards the data packet to the preceding network element.

22. Method according to claim 21,
**characterised in that**,
for all marked groups of channels, which are inserted at the network element, a channel-individual pre-emphasis is carried out and their corresponding markers are deleted.

23. Method according to one of the claims 18 to 22,
**characterised in that**,
for all groups of channels that are not marked or groups of channels that are not inserted at the network element, an adjustment is made to the average power if the counter (COUNT) amounts to the value 1.

24. Method according to one of the claims 19 to 23,
**characterised in that**,
if the value of the counter (COUNT) does not show "1", a channel individual pre-emphasis is carried out for groups of channels that are marked and inserted at the network element.

25. Method according to claim 24,
**characterised in that**,
the average power per group remains constant.

26. Method according to one of the claims 19 to 25,
**characterised in that**,
a network element, at which all groups of channels are terminated and which receives a data packet in the forward direction with counter (COUNT) at the value "2", sends a data packet with the counter (COUNT) at the value "0" and deactivates markers at the preceding network element.

27. Method according to one of the claims 19 to 26,
**characterised in that**,
a network element, which is not the first element of a network section - at which no group of channels is connected through - and which receives a data packet with the counter (COUNT) at the value "0" in a forward direction or in the reverse direction, forwards said data packet without change to the preceding network element.

28. Method according to one of the claims 19 to 27,
**characterised in that**,
at the network element at the beginning of the network section, the value of the counter (COUNT) increments by "1" progressively from one pre-emphasis step to another pre-emphasis step, until the receipt of a data packet with the value "0" on the counter (COUNT) signals the completion of the pre-emphasis for this network section.

29. Method according to one of the claims 19 to 28,
**characterised in that**,
a network element, at which all groups of channels are preferably terminated at the end of the considered network section LWL and which receives a data packet with the counter (COUNT) at the value "0" in the forward direction, initiates a pre-emphasis step or further pre-emphasis steps for the subsequent network section (LWL').

## Revendications

1. Procédé de pré-accentuation d'un signal optique de multiplexage par répartition en longueurs d'ondes, dont le signaux sont transmis rassemblés en groupes (B1, B2, B3, B4) de longueurs d'ondes différentes par des canaux express ainsi que par des canaux drop, des canaux add ou des canaux add-drop dans une ligne (LWL) de transmission ayant plusieurs tronçons et éléments (NE) de réseau, comme des points d'introduction, des points (OADM) de dérivation ou des points de terminaison,
dans lequel on transmet les canaux express d'un premier élément (NE1) de réseau à un deuxième élément (NE2) de réseau, tandis que des canaux drop, des canaux add ou des canaux add-drop sont introduits ou terminés aussi sur des points (OADM) de dérivation disposés entre le premier et le deuxième élément de réseau,
**caractérisé en ce que**
dans un élément de réseau s'effectue, lors de la terminaison d'au moins un groupe (B1) de signaux, sur son point (NE, OADM) d'introduction, un réglage de puissance moyen et un réglage de puissance individuelle par canal des signaux de ce groupe, de manière à obtenir des distances (OSNR1) signal-bruit données à l'avance, tandis que, pour les groupes (B2, B3, B4) de signaux non terminés, le réglage d'une puissance moyenne s'effectue sur un élément (NE, OADM) de réseau précédent.

2. Procédé suivant la revendication 1,
**caractérisé**
**en ce qu'**au point d'introduction, on diminue la puissance de signal moyenne d'un groupe terminé ou dérivé dans un point de dérivation suivant ayant des canaux drop ou des canaux add-drop, au bénéfice de la puissance moyenne de signal d'un autre groupe allant plus loin de canaux express.

3. Procédé suivant la revendication 1 ou 2,
**caractérisé**
**en ce que** la nouvelle répartition des puissances moyennes de signal entre les groupes (B1, B2, B3, B4) a lieu dans des éléments (NE) de réseau d'introduction ou de commutation avec une régulation de la puissance du signal.

4. Procédé suivant l'une des revendications précédentes,
**caractérisé**
**en ce que** les prescriptions de distances (OSNR1, OSNR2, OSNR3, OSNR4) signal-bruit moyennes ou de différences des distances signal-bruit entre les divers groupes (B1, B2, B3, B4) de signaux sont prescrites sur leur point de terminaison par un système de gestion de réseau.

5. Procédé suivant l'une des revendications précédentes 1 à 4,
**caractérisé**
**en ce que**, pour déterminer les variations de puissance à effectuer, on part d'abord par hypothèse du fait que tous les canaux peuvent être modifiés individuellement au point adéquat et on calcule à partir de cette prescription la variation moyenne de puissance du groupe de canaux.

6. Procédé suivant l'une des revendications précédentes,
**caractérisé**
**en ce que**, pour commander l'un des réglages de sous pré-accentuation, on active un élément (NEi, OADMj) de réseau à l'aide d'un paquet de données qui est transmis en aller et retour par tronçon du premier point (NEO) d'introduction aux autres éléments (NEi, OADMj) de réseau et en ce qu'il y a un repérage (X) des points d'introduction et de terminaison de chacun des groupes (B1, B2, B3, B4) de signaux.

7. Procédé suivant la revendication 6,
**caractérisé**
**en ce que** pour un élément (NEi, OADMj) de réseau, le paquet de données sert à commander une pré-accentuation supplémentaire et individuelle par canal de l'un des groupes (B1, B2, B3, B4) de signaux.

8. Procédé suivant la revendication 6 ou 7,
**caractérisé**
**en ce que**, pour commander le sens de transmission et la portée du paquet de données entre les éléments (NEi, OADMj) de réseau, un compteur (COUNT) est initialisé, incrémenté ou diminué dans le paquet de données.

9. Procédé suivant l'une des revendications précédentes,
**caractérisé**
**en ce que**, suivant le type de codage du compteur (COUNT) et d'un repérage (X) pour la dérivation d'un groupe (B1, B2, B3, B4), on choisit un protocole de régulation prévu sur un élément de réseau commandant, sélectionné pour la commande de stades de pré-accentuation avec des réglages de sous pré-accentuation et/ou de la pré-accentuation individuelle par canal supplémentaire des groupes (B1, B2, B3, B4) le long de la ligne (LWL) de transmission.

10. Procédé suivant la revendication 9,
**caractérisé**
**en ce qu'**à la réception d'un paquet de données dont le compteur (COUNT) s'élève à la valeur "0" un élément (NE1, OADM1, OADM2,...) prend en charge la commande des stades de pré-accentuation pour ses tronçons de réseaux suivants et
**en ce que** le compteur (COUNT) est incrémenté à la valeur 1.

11. Procédé suivant la revendication 9 ou 10,
**caractérisé**
**en ce qu'**à la réception d'un paquet de données dont le compteur (COUNT) s'élève à la valeur "1", on renvoie sur un élément (NE1, OADM1, OADM2, ...) de réseau un spectre des signaux ainsi que le paquet de données provenant de l'élément (OADM1, OADM2, NE2) de réseau venant immédiatement ensuite le long de la ligne (LWL) de transmission,
et **en ce que**, lors du parcours en arrière du paquet de données dans chaque élément (NE2, OADM2, OADM1) de réseau sans point de terminaison pour tous les groupes de canaux qui s'y trouvent, le compteur (COUNT) est augmenté de la valeur 1 ou sinon reste inchangé.

12. Procédé suivant la revendication 11,
**caractérisé**
**en ce que** lorsque le compteur (COUNT) est inchangé, on transmet le paquet de données en sens opposé.

13. Procédé suivant l'une des revendications 10 à 12,
**caractérisé en ce que** l'on active, sur l'un des éléments (OADM1, OADM2, NE2) de réseau ayant une terminaison d'au moins l'un des groupes de canaux, un repérage (X) dans le paquet de données transmis pour ce ou ces groupes et
**en ce que** l'on efface le repérage (X) pour un groupe au point d'introduction du même groupe lors du retour du paquet de données.

14. Procédé suivant l'une des revendications 10 à 13,
**caractérisé**
**en ce qu'**à la réception d'un paquet de données, dont le compteur (COUNT) s'élève à une valeur plus grande que 1, on abaisse de la valeur 1, sur un élément (NE1, OADM1, OADM2,...) de réseau, le compteur (COUNT) du paquet de données transmis vers l'avant (c'est-à-dire dans le sens allant du premier élément (NE1) de réseau au deuxième élément (NE2) de réseau, si au moins un groupe de canaux n'est pas terminé, c'est-à-dire parcouru ou s'il n'y a pas été effectué une introduction.

15. Procédé suivant l'une des revendications 10 à 14,
**caractérisé**
**en ce qu'**à la réception d'un paquet de données, dont le compte (COUNT) s'élève à une valeur supérieure à 1, on augmente de la valeur 1, sur un élément (NE1, OADM1, OADM2,...) de réseau, le compteur (COUNT) du paquet de données transmis vers l'arrière c'est-à-dire dans le sens allant du deuxième élément (NE2) de réseau au premier élément (NE1) de réseau et
**en ce qu'**à l'arrivée du paquet de données transmis vers l'arrière sur l'élément (NE1) de réseau qui commande, le compteur (COUNT) reste inchangé.

16. Procédé suivant l'une des revendications 10 à 15,
**caractérisé**
**en ce qu'**à l'arrivée du paquet de données transmis versl'arrière sur le premier élément (NE1) de réseau qui commande ayant un compteur (COUNT), dont la valeur est égale à la valeur sur le même élément (NE1) de réseau lors de la transmission précédente vers l'avant du paquet de données, le compteur est mis à la valeur 0,
**en ce que** le paquet de données est transmis vers l'avant vers l'élément (OADM2) de réseau immédiatement suivant,
**en ce que** le compteur (COUNT) est incrémenté jusqu'à la valeur 1 et ainsi l'élément (NE2) de réseau immédiatement suivant est défini comme étant le nouvel élément de réseau qui commande pour la commande d'autres stades de pré-accentuation.

17. Procédé suivant l'une des revendications 10 à 16,
**caractérisé**
**en ce que** l'on effectue des stades de pré-accentuation sur l'élément de réseau de commande pour un groupe de canaux pour lequel un repère (X) y est activé.

18. Procédé suivant la revendication 9,
**caractérisé**
**en ce que** l'on commande les stades de pré-accentuation sur des éléments de réseau différents sélectionnés et qui commandent pendant la transmission du paquet de données dans la ligne (LWL) de transmission.

19. Procédé suivant la revendication 18,
**caractérisé**
**en ce qu'**un élément de réseau, qui reçoit un paquet de données ayant le compteur (COUNT) ayant la valeur "1" dans le sens vers l'avant, renvoie des valeurs du spectre de puissance lorsque le compteur n'est pas modifié au début de la ligne (LWL) de transmission et repère des groupes de canaux qui sont terminés sur cet élément de réseau.

20. Procédé suivant la revendication 18 ou 19,
**caractérisé**
**en ce qu'**un élément de réseau qui reçoit un paquet de données ayant une valeur du compteur (COUNT) plus grande que "1" dans le sens vers l'avant, abaisse de la valeur "1" le compteur (COUNT) et continue à acheminer le paquet de données à l'élément de réseau immédiatement suivant.

21. Procédé suivant l'une des revendications 18 à 20,
**caractérisé**
**en ce qu'**un élément de réseau, qui reçoit un paquet de données dans le sens vers l'arrière, augmente de la valeur "1" le compteur (COUNT) et continue à acheminer le paquet de données vers l'élément de réseau précédent.

22. Procédé suivant la revendication 1,
**caractérisé**
**en ce que** pour tous les groupes repérés de canaux qui sont insérés sur l'élément de réseau, on effectue une pré-accentuation individuelle au canal et on efface ses repères correspondants.

23. Procédé suivant l'une des revendications 18 à 22,
**caractérisé**
**en ce que** pour tous les groupes de canaux non repérés ou pour tous les groupes de canaux qui n'ont pas été insérés sur l'élément de réseau, on effectue une adaptation de puissance moyenne dans le cas où le compteur (COUNT) s'élève à la valeur "1".

24. Procédé suivant l'une des revendications 19 à 23,
**caractérisé**
**en ce que**, dans le cas où la valeur du compteur (COUNT) ne s'élève pas à "1", on effectue une pré-accentuation individuelle au canal pour les groupes de canaux repérés et insérés sur l'élément de réseau.

25. Procédé suivant la revendication 24,
**caractérisé**
**en ce que** la puissance moyenne par groupe reste constante.

26. Procédé suivant l'une des revendications 19 à 25,
**caractérisé**
**en ce qu'**un élément de réseau, sur lequel tous les groupes de canaux sont terminés et qui reçoit un paquet de données dans le sens vers l'avant ayant le compteur (COUNT) à la valeur "2", envoie un paquet de données ayant le compteur (COUNT) à la valeur "0" et désactive des repères sur l'élément de réseau précédent.

27. Procédé suivant l'une des revendications 19 à 26,
**caractérisé**
**en ce qu'**un élément de réseau, qui n'est pas le premier élément d'un tronçon de réseau -sur lequel ne passe aucun groupe de canaux- et qui reçoit un paquet de données ayant le compteur (COUNT) à la valeur "0" dans le sens vers l'avant ou vers l'arrière, continue à l'acheminer sans modification vers l'élément de réseau précédent.

28. Procédé suivant l'une des revendications 19 à 27,
**caractérisé**
**en ce que**, pour l'élément de réseau au début du tronçon de réseau, la valeur du compteur (COUNT) est augmenté de "1" pas à pas d'un stade de pré-accentuation à l'autre jusqu'à ce que la réception d'un paquet de données ayant la valeur "0" du compteur (COUNT) signale la fin de la pré-accentuation pour ce tronçon de réseau.

29. Procédé suivant l'une des revendications 19 à 28,
**caractérisé**
**en ce qu'**un élément de réseau, sur lequel tous les groupes de canaux sont terminés de préférence à l'extrémité du tronçon (LWL) de réseau considéré et qui reçoit un paquet de données ayant le compteur (COUNT) à la valeur "0" dans le sens vers l'avant, initialise un ou d'autres stades de pré-accentuation pour le tronçon (LWL') de réseau suivant.
